Europäisches Patentamt

European Patent Office

Office européen des brevets

(11) Veröffentlichungsnummer: **0 025 500**
A1

# (12) EUROPÄISCHE PATENTANMELDUNG

(21) Anmeldenummer: 80104463.7

(22) Anmeldetag: 29.07.80

(51) Int. Cl.³: **C 08 J 7/04,** C 09 D 3/72,
B 32 B 25/08, B 32 B 27/40,
C 08 G 18/48, C 08 G 18/76
// C09J3/16

(30) Priorität: 14.08.79 DE 2932866

(43) Veröffentlichungstag der Anmeldung: 25.03.81
Patentblatt 81/12

(84) Benannte Vertragsstaaten: BE FR GB IT NL SE

(71) Anmelder: **METZELER KAUTSCHUK GMBH,**
**Westendstrasse 131, D-8000 München 2 (DE)**

(72) Erfinder: **Blahak, Johannes, Dr., Gautinger Strasse 3,**
**D-8035 Gauting-Buchendorf (DE)**

(74) Vertreter: **Michelis, Theodor, Dipl.-Ing.,**
**Westendstrasse 131, D-8000 München 2 (DE)**

(54) **Verfahren zur Herstellung eines haftenden Polyurethan- bzw. Polyharnstoffelastomerfilms auf Gummi-Formartikeln.**

(57) Ein auf Kautschuk- oder Gummi-Formartikeln haftender Elastomerfilm entsteht durch lösungsmittelfreies Aufbringen von Polypropylenoxidpolyolen oder Polytetrahydrofuranpolyolen und 4,4'-Diphanylmethandiisocyanat auf die Formartikel und Kettenverlängerung dieser Substanzen unter Ausnutzung der Luftfeuchtigkeit und/oder Adsorptionsfeuchtigkeit zu dem Elastomerfilm.

EP 0 025 500 A1

0025500

METZELER KAUTSCHUK GMBH    München, den 28.7.1980
München                              Unser Zeichen: MK 214 P 79 EP

BEZEICHNUNG GEÄNDERT
siehe Titelseite

Verfahren zur Herstellung eines haftenden Elastomerfilms

Die Erfindung betrifft ein Verfahren zur Herstellung eines haftenden Polyurethan- bzw. Polyharnstoff-Elastomerfilms auf Kautschuk- oder Gummi-Formartikeln.

Ein solcher Elastomerfilm kann entweder als Lacküberzug oder als Kleber für eine Beflockung dienen, wie sie üblicherweise auf Gummi-Formartikel , beispielsweise Gummiprofile , aufgebracht wird.

Bei der Herstellung solcher Elastomerfilme werden in Lösungsmitteln gelöste Polymere, beispielsweise Polyurethane oder Polychloroprene, in Gegenwart von Hilfsmitteln, wie polyfunktionellen Kleberisocyanaten, Polymerblends, reaktiven Verdünnern, Alterungsschutzmitteln usw. auf die Oberfläche der Kautschuk- und Gummi-Formartikel aufgetragen, die anschließend mit der Beflockung versehen werden. Nach Abdampfen des Lösungsmittels ergibt sich ein gegebenenfalls beflockter, haftender Polymerfilm auf der Oberfläche des Formartikels, beispielsweise eines Profils oder einer Bahn.

Nachteilig ist bei diesem bekannten Verfahren, daß während der Beschichtung die Umwelt in arbeitshygienisch bedenklicher Weise durch die Lösungsmitteldämpfe belastet wird; außerdem muß das Basismaterial vor dem Aufbringen des Polymers aufgerauht werden, um bei wenig polaren Kautschuk- bzw. Gummi-Qualitäten, beispielsweise EPDM, eine für die üblichen Anwendungen ausreichende Haftung des Polymerfilms auf dem Formkörper zu erreichen. Diese Aufrauhung des Form-

0025500

körpers ist jedoch sehr umständlich und mühsam, so daß reproduzierbare, zuverlässige Ergebnisse nur mit großem apparativen und konstruktiven Aufwand erzielt werden können.

Es ist deshalb versucht worden, solche Elastomerfilme ohne Verwendung von Lösungsmittel und ohne vorheriges Aufrauhen des Formkörpers aufzubringen, indem die chemische Affinität zwischen Formkörper und polymerem Material erhöht wird. Dazu wurden beispielsweise Telechelics als funktionelle Polymere beim Aufbau des Polyurethanpolymerfilmes eingesetzt oder spezielle Kleberisocyanate zugesetzt, beispielsweise Isocyanatophenyl-Sulfenchlorid oder 4,4', 4''-Triisocyanato-triphenyl-methan. Auch dann bleibt trotzdem die Haftung an nur schwach polaren Gummiqualitäten wenig befriedigend, da die dabei hergestellten Polymerfilme, insbesondere unter hydrolytischen Bedingungen, zur Ablösung von der Oberfläche des Formkörpers neigen; außerdem büßen solche Polymerfilme bei Verwendung von Kleberisocyanaten in Konzentrationen von mehr als 3 % im Polymerfilm schnell die für den Einsatz in der Praxis wichtige, hohe Bruchdehnung ein.

Es ist deshalb ein Ziel der vorliegenden Erfindung, ein Verfahren zur Herstellung eines haftenden Polyurethanbzw. Polyharnstoff-Elastomerfilms auf Kautschuk- oder Gummi-Formkörpern zu schaffen, bei dem die oben erwähnten Nachteile nicht auftreten.

Insbesondere soll ein Verfahren vorgeschlagen werden, bei dem auch ohne Aufrauhen des Formkörpers die sichere, zuverlässige Haftung des Elastomerfilms bei ausreichend hoher Bruchdehnung gewährleistet ist.

Diese Aufgabe wird erfindungsgemäß dadurch gelöst, daß ein Prepolymer mit reaktiven Isocyanat-Endgruppen und ein Polyadditions-Katalysator, gegebenenfalls mit den üblichen Zusätzen, auf die Oberfläche der Formartikel aufgebracht und unter Ausnutzung von Feuchtigkeit zu dem Elastomerfilm kettenverlängert werden.

Zweckmäßige Ausführungsformen sind in den Unteransprüchen zusammengestellt.

Die mit der Erfindung erzielten Vorteile beruhen insbesondere darauf, daß die hergestellten Elastomerfilme auf den gängigen Kautschuk- bzw. Gummiqualitäten, selbst an EPDM und EPDM/CR-Verschnitten, sehr gut haften und auch zu einer ausgezeichneten Haftung der Beflockung, beispielsweise einer Polyamid-Beflockung, führen. Dabei mußten die Formkörper vorher nicht aufgerauht werden, sondern die Ausgangsmaterialien für den Elastomerfilm konnten direkt auf die frisch geformte Oberfläche des Körpers aufgebracht werden. Es wird angenommen, daß die erzielte gute Haftung auf die gegenseitige Durchdringung der Polymersysteme während des Aufbaus der polymeren Polyurethan- bzw. Polyharnstoff-Matrix des Elastomerfilms zurückzuführen ist. Dabei wird gleichzeitig das in Form von Feuchtigkeit, nämlich als Adsorptions-Feuchte bzw. Luftfeuchtigkeit, auf bzw. in der Oberfläche des Formkörpers vorhandene Wasser bei der Vernetzungsreaktion ausgenutzt und kann deshalb das Haften des ausreagierten Polymerfilms auf der Oberfläche des Formkörpers nicht mehr beeinflussen.

Die Rolle des Wassers kann auch von einem auf oder in dem Formartikel positionierten Vernetzer, wie beispielsweise einem Diol oder Diamin bzw. Polyol oder Polyamin, anteilig, aber auch weitgehend, übernommen werden.

Ein mit gleicher Stöchiometrie und Chemie aus Lösungsmitteln vorgefertigter Elastomerfilm ergibt auf einem Gummi-Formkörper sehr viel schlechtere Haftergebnisse als ein Elastomerfilm, der mit dem erfindungsgemäßen Verfahren hergestellt ist.

Besonders gute Haftwerte erhält man, wenn man das gegebe-

0025500

nenfalls lösungsmittelfreie Prepolymer und den Polyadditions-Katalysator mit elektronenstrahlvernetzbaren Verdünnern auf Acrylsäurederivat-Basis verdünnt und dieses Material anschließend, synchron zur chemischen Vernetzung, zusätzlich mit Elektronenstrahlen vernetzt. Durch entsprechende Auswahl der Dosis der Elektronenbestrahlung kann man den sonst nicht zu vermeidenden Abfall der Bruchdehnung in gewissen, steuerbaren Grenzen halten.

Solche Elastomerfilme können als Haftfilme für beflockte Gummi-Profile, zur Reaktiv-Verklebung von Gummi mit Polyurethan- oder Polyharnstoff-Systemen, vor allem Schäumen und Integralschäumen, sowie zur reaktiven Kaschierung von Polymerteilen verwendet werden.

Die Erfindung wird im folgenden anhand von Beispielen näher erläutert.

Beispiel 1

150 g eines Prepolymers aus Polypropylenoxiddiol des mittleren Molekulargewichtes 1500 und 50 g 4,4'-Diphenylmethan-Diisocyanat, das durch einstündiges Rühren der Komponenten bei 75°C hergestellt wurde, wurde nach Zusatz von 0,1 Gew.-Teilen Dibutylzinndilaurat auf einen Gummikörper aufgerakelt, der aus 2 Gew. Teilen EPDM und 1 Gew. Teil CR bestand; anschließend wurde auf diese Oberflächenschicht elektrostatisch eine 0,6 mm dicke Polyamid-Beflockung aufgebracht.

Dieser Elastomerfilm härtete unter Ausnutzung der Adsorptions- und Luftfeuchtigkeit innerhalb von 10 Minuten aus.

Der Elastomerfilm wurde folgenden Prüfungen unterworfen:

a) Eine Probe wurde 5 Tage lang bei 80°C in Wasser gelagert. Es ergab sich kein Einfluß auf die Film- und Beflockungshaftung.

b) Ein Siegellackstück von 1 cm Breite und 9 cm Länge wurde im erweichten Zustand auf die Probe gedrückt. Nach dem Erkalten wurde mit der Daimler-Benz-Prüfnorm (DBL 5575) der Schälwiderstand gemessen. Es ergab sich ein Wert von 2,1 bis 2,5 (daN/10 mm). Von der Prüfnorm wird ein Sollwert von 2,0 (daN/10 mm) gefordert.

Beispiel 2

Mit dem in Beispiel 1 angegebenen Verfahren wurde ein Prepolymer aus Polytetrahydrofuran mit einem Molekulargewicht 2000 und 4,4'-Diphenylmethan-Diisocyanat im Molverhältnis 1 : 2 auf reinen EPDM-Gummi aufgebracht. Der Schälwiderstand betrug 2,5 bis 4 (daN/10 mm).

Beispiel 3

Mit dem Verfahren nach Beispiel 1 wurde das Prepolymer nach Beispiel 2, jedoch unter Zusatz von 1 % Desmodur R der Bayer AG aufgebracht. Der Schälwiderstand betrug 3,0 bis 3,2 (daN/10 mm). Die Haftung des Elastomerfilms und der Beflockung änderte sich auch nach einer 5-tägigen Lagerung bei 80°C in Wasser nicht.

Beispiel 4

Bei dem in Beispiel 2 beschriebenen Verfahren wurde dem Film 5 % Acrylsäuredibutylamid, bezogen auf das Prepolymer, zugesetzt und eine zusätzliche Vernetzung mittels Elektronenstrahlen durchgeführt, und zwar mit 180kV-Elektronen.

Bei einer 5-tägigen Lagerung bei 80°C in Wasser änderte sich die Haftung des Elastomerfilms und der Beflockung nicht.

Beispiel 5

Eine reine EPDM-Gummiqualität wurde mit geschmolzenem 1,12-Duodekamethylen-Diamin beschichtet, kurz auf 40°C erwärmt und bei dieser Temperatur mit einem Prepolymer gemäß Beispiel 2 berakelt; anschließend wurde elektrostatisch eine Beflockung aufgebracht. Als Katalysator wurden prepolymerseitig 0,15 Gew.Teile Dibutylphosphat verwendet.

Der Schälwiderstand betrug 2,1 (daN/10 mm).

Der Elastomerfilm löste sich nach einer 5-tägigen Lagerung bei 80°C in Wasser nicht.

Beispiel 6

Es wurde mit dem Verfahren nach Beispiel 2 gearbeitet, wobei jedoch prepolymerseitig 0,1 Gew. Teile Stabaxol 1 der Bayer AG zugesetzt wurde.

Der Schälwiderstand betrug 2,5 bis 4,0 (daN/10 mm).

Eine 5-tägige Lagerung bei 80°C in Wasser ergab keine Ablösung des Films bzw. der Beflockung.

Patentansprüche

1. Verfahren zur Herstellung eines haftenden Polyurethan- bzw. Polyharnstoff-Elastomerfilms auf Kautschuk- oder Gummi-Formartikeln, bei dem ein Prepolymer auf der Basis von 4,4'-Diphenylmethandiisocyanat und ein Polyadditions-Katalysator, gegebenenfalls mit den üblichen Zusätzen, auf die Oberfläche der Formartikel aufgebracht und ausgehärtet werden, d a d u r c h   g e -
k e n n z e i c h n e t ,  daß Polypropylenoxidpolyole oder Polytetrahydrofuranpolyole, jeweils mit einem mittleren Molekulargewicht von 400 bis 5000, und 4,4'-Diphenylmethandiisocyanat lösungsmittelfrei aufgebracht und unter Ausnutzung der Luftfeuchtigkeit und/oder der Adsorptionsfeuchtigkeit zu dem Elastomerfilm kettenverlängert werden.

2. Verfahren nach Anspruch 1, dadurch gekennzeichnet, daß Polypropylenoxidpolyole oder Polytetrahydrofuranpolyole mit einem Molekulargewicht von 1000 bis 4000 verwendet werden.

3. Verfahren nach einem der Ansprüche 1 oder 2, dadurch gekennzeichnet, daß als Katalysator eine Zinnverbindung, insbesondere Dibutylzinndilaurat, verwendet wird.

4. Verfahren nach einem der Ansprüche 1 oder 2, dadurch gekennzeichnet, daß als Katalysator cyklische Lactame, insbesondere Caprolactam, verwendet werden.

| | EINSCHLÄGIGE DOKUMENTE | | KLASSIFIKATION DER ANMELDUNG (Int Cl.¹) |
|---|---|---|---|
| Kategorie | Kennzeichnung des Dokuments mit Angabe, soweit erforderlich, der maßgeblichen Teile | betrifft Anspruch | |
| A | GB - A - 1 449 533 (BRIDGESTONE TIRE KABUSHIKI KAISHA)<br><br>+ Beispiel 1 +<br><br>-- | 1 | C 08 J 7/04<br>C 09 D 3/72<br>B 32 B 25/08<br>B 32 B 27/40<br>C 08 G 18/48<br>C 08 G 18/76//<br>C 09 J 3/16 |
| | US - A - 3 991 255 (A.A. BLAS-KIEWICZ et al.)<br><br>+ Spalte 4, Zeilen 38-58;<br>Spalte 5, Zeilen 52-66;<br>Spalte 6, Zeilen 5-14,18-19;<br>Beispiele; Ansprüche 1,7 +<br><br>-- | 1,2 | |
| A | GB - A - 1 405 257 (DUNLOP LIMITED)<br><br>+ Gesamt +<br><br>---- | 1,2 | **RECHERCHIERTE SACHGEBIETE (Int. Cl.³)**<br><br>C 08 J<br>C 09 D<br>C 08 G 18/00<br>C 09 J<br>B 32 B 25/00<br>B 32 B 27/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 17-11-1980 | KALTENEGGER |

EPA form 1503.1 06.78